(19) Europäisches Patentamt
European Patent Office
Office européen des brevets

(11) **EP 1 132 678 B1**

(12) **EUROPÄISCHE PATENTSCHRIFT**

(45) Veröffentlichungstag und Bekanntmachung des Hinweises auf die Patenterteilung:
**26.08.2009   Patentblatt 2009/35**

(51) Int Cl.:
***F21V 8/00*** *(2006.01)*

(21) Anmeldenummer: **01105863.3**

(22) Anmeldetag: **09.03.2001**

(54) **Leuchte mit einem um einen Mittelpunkt symmetrisch angeordneten Hohllichtleiter und symmetrischer Lichteinstrahlung, insbesondere Rundleuchte**

Luminaire with in the centre positioned hollow symetric lightguide and symetric iradiation, in particular circular luminaire

Luminaire avec guide de lumière creux symétrique situé au centre et irradiation symétrique, en particulier luminaire circulaire

(84) Benannte Vertragsstaaten:
**AT BE CH CY DE DK ES FI FR GB GR IE IT LI LU MC NL PT SE TR**

(30) Priorität: **10.03.2000   DE 10011676**

(43) Veröffentlichungstag der Anmeldung:
**12.09.2001   Patentblatt 2001/37**

(73) Patentinhaber: **Siteco Beleuchtungstechnik GmbH**
**83301 Traunreut (DE)**

(72) Erfinder:
• **Belloni, Paola**
**83278 Traunstein (DE)**
• **Prodell, Peter**
**83308 Trostberg (DE)**

(74) Vertreter: **Schohe, Stefan et al**
**Forrester & Boehmert**
**Pettenkoferstrasse 20-22**
**80336 München (DE)**

(56) Entgegenhaltungen:
**EP-A- 0 496 921          EP-A- 1 055 870**
**EP-A- 1 130 312          WO-A-00/11399**
**DE-U- 29 717 063          US-A- 5 863 114**

**Beschreibung**

Die Erfindung betrifft eine Leuchte gemäß dem Oberbegriff des Anspruchs 1.

Leuchten für Innenräume unterliegen häufig der Anforderung einer Abschirmung des abgestrahlten Lichts in mehreren Ebenen, d.h. einer Absenkung der mittleren Leuchtdichte der Lichtaustrittsfläche unter einen vorgegebenen Grenzwert oberhalb eines Grenzwinkels zu einer Senkrechten zu der Lichtaustrittsfläche. Es wurde in der europäischen Patentanmeldung 99 110 141.1 vorgeschlagen, eine solche Abschirmung bei einer Leuchte mit einem Hohllichtleiter, aus dem Licht zu der Lichtaustrittsfläche ausgekoppelt wird, durch zwei Platten mit linienförmigen Prismen herbeizuführen, deren Richtung senkrecht zueinander steht.

Die nachveröffentlichte EP 1 130 312 beschreibt eine Leuchte, bei der in einem kreisförmigen Hohllichtleiter durch eine zentrale Öffnung eine Lampe in den Hohlraum des Hohllichtleiters eingeführt ist. In der Lichtaustrittsöffnung des Hohllichtleiters sind, der Lampe gegenüberliegend, zwei Prismenplatten angeordnet, von denen die eine kreisringförmige Prismen aufweist und die andere sich von dem Zentrum der Platte sternförmig radial nach außen erstreckende Prismen.

EP 0 496 921 A1 beschreibt ein Langfeldleuchte mit einer stabförmigen Leuchtstofflampe und einem langgestreckten Reflektor, dessen Öffnung mit einer Abdeckscheibe verschlossen ist. Um die durch den Reflektor erzeugte geometrische Abschirmung in Randbereichen zu verbessern, sind in diesen Randbereichen der Abdeckscheibe Prismen vorgesehen, welche das von der Lampe auf sie einfallende Licht stärker zu der Vertikalen umlenken.

Es ist die Aufgabe der Erfindung, eine Leuchte der eingangs beschriebenen Art, speziell in der Form einer Rundleuchte, eines Downlights oder dgl., zur Verfügung zu stellen, bei welcher eine Abschirmung in mehreren Ebenen mit einer einzigen lichtbrechenden Struktur erzeugt werden kann.

Diese Aufgabe wird gelöst durch eine Leuchte zur Beleuchtung von Innenräumen mit einem nicht viereckigen Gehäuse und/oder einer nicht viereckigen Lichtaustrittsfläche, insbesondere einer Rundleuchte oder einem Downlight, welche mindestens einen Hohllichtleiter mit einem Hohlraum sowie einer Lichteinstrahleinrichtung, welche eine oder mehrere Lichtquellen umfaßt und von welcher Licht in den Hohlraum des Hohllichtleiters eingestrahlt wird, und mindestens eine Lichtauskoppeleinrichtung aufweist, welche aus dem Hohlraum Licht zum Austritt an einer nicht viereckigen Lichtaustrittsfläche der Leuchte auskoppelt, wobei die Lichtauskoppeleinrichtung aus einem lichtdurchlässigen Material besteht und eine Grenzfläche zwischen zwei Medien mit unterschiedlichem Brechungsindex aufweist, die mit einer lichtbrechenden Struktur aus linienförmigen lichtbrechenden Strukturelementen versehen sind, wobei die lichtbrechende Struktur zumindest in einer Fläche senkrecht zu der Lichtaustrittsfläche der Leuchte und den Linien, welchen die lichtbrechenden Strukturelemente folgen, eine Lichtauskopplung oberhalb eines Grenzwinkels zu einer Senkrechten zu der Lichtaustrittsfläche im wesentlichen verhindert und dadurch eine Abschirmung, bezogen auf diese Fläche bzw. Flächen, erzeugt, dadurch gekennzeichnet, daß die Lichteinstrahleinrichtung so eingerichtet ist, daß das von ihr in den Hohlraum eingestrahlte und auf die Lichtauskoppeleinrichtung direkt einfallende Licht überwiegend oder im wesentlichen in einer Richtung senkrecht zu den die Strukturelemente festlegenden Linien einfällt, wobei im Strahlengang des aus der Lichtaustrittsfläche austretenden Lichts genau eine eine Abschirmung erzeugende lichtbrechende Struktur angeordnet ist.

Es kann vorgesehen sein, daß die Linien, welchen die Strukturelemente folgen, geschlossene Linien sind, welche vorzugsweise eine Symmetrie bezüglich einer Achse senkrecht zu der Grenzfläche aufweisen.

Diese Symmetrie kann diskret oder kontinuierlich sein. Im ersten Fall folgen die Linien einem gleichseitigen Mehreck, z.B. einem gleichseitigen Dreieck, Fünfeck, Sechseck oder dgl., im zweiten Fall folgen die Linien einem Kreis.

Es kann vorgesehen sein, daß die lichtbrechenden Strukturelemente entsprechend einer Symmetrie bezüglich einer Achse senkrecht zu der Grenzfläche mit der lichtbrechenden Struktur verlaufen und entlang dieser Symmetrieachse eine Lichteinstrahleinrichtung angeordnet ist, welche das Licht überwiegend oder im wesentlichen in einer Richtung senkrecht zu den die Strukturelemente festlegenden Linien in den Hohlraum einstrahlt.

Es kann vorgesehen sein, daß die Strukturelemente in der Form konzentrischer Kreise ausgebildet sind und die Lichteinstrahleinrichtung entlang der Symmetrieachse angeordnet ist und das Licht im wesentlichen oder überwiegend radial in den Hohlraum einstrahlt.

Es kann vorgesehen sein, daß eine Lichtquelle oder mehrere Lichtquellen entlang der Symmetrieachse angeordnet sind, welche Licht im wesentlichen oder überwiegend in radialer Richtung in den Hohlraum einstrahlt.

Die Lichtquelle kann in dem Hohlraum des Hohllichtleiters oder außerhalb des Hohlraums in einem zentralen Loch in der Mitte eines kreisringförmigen Hohllichtleiters angeordnet sein. Das Licht erzeugende Element der Lichtquelle sollte eine möglichst kleine radiale Erstrekkung aufweisen und eine Symmetrie entsprechend der Symmetrie der Linien aufweisen, also zum Beispiel eine Rotationssymmetrie im Falle von Kreislinien. Der Idealfall wäre eine linienförmige Lichtquelle, wobei die Linie, welche die Lichtquelle festlegt, mit der Symmetrieachse zusammenfällt. In der Praxis wird man Lichtquellen verwenden, die diesem Ideal möglichst nahekommen, z.B. stabförmige Lichtquellen, Halogenglühlampen, Hochdrucklampen mit klarem Kolben oder Leuchtdioden mit kleinen Abmessungen.

Beispielsweise kann vorgesehen sein, daß ein Stab oder dgl. mit Leuchtdioden oder anderen Lichtquellen mit einer sehr kleinen Ausdehnung besetzt ist, welche Licht, ggf. im Zusammenwirken mit weiteren Elementen, im wesentlichen nur in eine Richtung abgeben, wobei die Leuchtdioden symmetrisch entsprechend der Symmetrie der Linien angeordnet sind.

Die Erfindung kann auch vorsehen, daß einer Lichtquelle ein fokussierendes Element, wie eine Linse oder ein Spiegel, welche das von der Lichtquelle abgestrahlte Licht im wesentlichen auf die Symmetrieachse fokussiert, und eine Umlenkeinrichtung zugeordnet sind, welche das fokussierte Licht von der Lichtquelle in Richtungen senkrecht zu den Linien der Strukturelemente umlenkt.

Gegebenenfalls können beide Funktionen, die Fokussierung und die Umlenkung, auch durch ein optisches Element, z.B. einen geeignet ausgebildeten optischen Körper, der an seiner Lichteintrittsfläche fokussierend wirkt und durch Totalreflexion das in ihm laufende Licht umlenkt, gleichzeitig wahrgenommen werden.

Es kann auch vorgesehen sein, daß eine oder mehrere Lichtquellen außerhalb des Hohllichtleiters entlang einem radial inneren oder äußeren Rand angeordnet sind und der Lichtquelle ein oder mehrere kollimierende Elemente zugeordnet sind, welche das in den Hohlraum eingestrahlte Licht im wesentlichen auf Ebenen senkrecht zu den Linien der lichtbrechenden Strukturelemente konzentrieren.

Beispielsweise kann zwischen der Lichtquelle und dem Hohlraum des Hohllichtleiters eine kollimierende Prismenstruktur vorgesehen sein, wie sie beispielsweise in US-PS 5 863 114 vorgeschlagen wurde. Alternativ kann ein der Lichtquelle zugeordneter Einkoppelreflektor mit einer kollimierenden Strukturierung versehen sein. Beispielsweise kann ein Einkoppelreflektor, der mit einer langgestreckten Lampe, z..B. einer stabförmigen Lampe oder einer Ringlampe, zusammenwirkt, die sich im wesentlichen in Umfangsrichtung erstreckt, in der Umfangsrichtung mit konkaven Vertiefungen ausgebildet sein, welche jeweils lokale Sammelspiegel bilden. Wenn das Zentrum der Lichtabgabe der Lampe lokal jeweils ungefähr im Brennpunkt dieser lokalen Spiegel liegt, wird das von dem Einkoppelreflektor reflektierte Licht der Lampe in der Richtung senkrecht zu der Umfangsrichtung konzentriert. Zur Kollimierung des direkt in den Hohllichtleiter abgestrahlten Lichts der Lampe kann eine Linse oder eine Blende vorgesehen sein.

Es kann auch vorgesehen sein, daß zur Kollimierung des in den Hohlraum eingestrahlten Lichts Lamellen vorgesehen sind, welche den Lichteinfall im wesentlichen auf die Richtung senkrecht zu den Linien der Prismen beschränken.

Es kann auch vorgesehen sein, daß mehrere im wesentlichen punktförmige Lichtquellen entlang des inneren und/oder äußeren Rands des Hohllichtleiters angeordnet sind, deren Licht in den Hohlraum eingestrahlt wird.

Dabei kann insbesondere jeder dieser Lichtquellen ein individuelles kollimierendes Element, z.B. ein Reflektor, eine Linse oder eine Blende zugeordnet sein, welches das Licht dieser Lichtquelle im wesentlichen in die Richtung senkrecht zu den Linien der lichtbrechenden Strukturelemente lenkt.

Beispielsweise kann ein Reflektor eine kleine Lampe, z.B. eine Halogenglühlampe, umgeben und im wesentlichen Lichtstrahlen parallel reflektieren. Ebenso kann der Lampe eine Sammellinse nachgeschaltet sein oder es kann der Lichtquelle eine Blende nachgeschaltet sein, welche im wesentlichen nur Licht in radialer Richtung durchläßt. Es kann auch vorgesehen sein, daß mehreren derartigen Lampen ein gemeinsames kollimierendes Element zugeordnet ist.

Es kann auch vorgesehen sein, daß das Licht der Lichtquelle oder der Lichtquellen überwiegend oder im wesentlichen in einem radial äußeren Bereich auf die lichtbrechende Struktur einfällt. Wenn die Lichtquelle im Zentrum der Leuchte über der lichtbrechenden Struktur angeordnet ist, kann unterhalb der Lichtquelle eine Abdeckung vorgesehen sein, welche den direkten Lichteinfall von der Lichtquelle auf die lichtbrechende Struktur in der Nähe des Zentrums verhindert. Da das Licht einer realen Lichtquelle nie vollständig radial abgestrahlt wird, würde in diesem Bereich, in dem sich die Richtung der Prismenstrukturen auf sehr kurzen Distanzen ändert, ein Teil des Lichts in einer nicht senkrechten Richtung zu den Linien der lichtbrechenden Strukturelemente einfallen, in denen diese keine oder nur eine geringere Abschirmwirkung haben. Dies wird durch die besagte Abdeckung verhindert. Diese Abdeckung kann auf der der Lampe zugewandten Seite, gegebenenfalls auch auf der der lichtbrechenden Struktur zugewandten Seite reflektierend ausgebildet sein, so daß das auf sie von der Lampe einfallende Licht zu den reflektierenden Wänden des Hohllichtleiters und von dort zu der Lichtauskoppeleinrichtung reflektiert wird. Wenn die Lichtquelle an einem radialen inneren oder äußeren Rand angeordnet ist, kann beispielsweise durch eine geeignete Gestaltung des Einkoppelreflektors und/oder der reflektierenden Dachwand des Hohllichtleiters erreicht werden, daß das Licht mehrheitlich in einem radial äußeren Bereich auf die lichtbrechende Struktur einfällt.

Im radial äußeren Bereich ist, insbesondere bei kreisförmigen Prismen, der Bereich der lichtbrechenden Strukturen, in dem sich die Richtung der Linien nur relativ wenig ändert, größer. Die Strahlen eines gerichteten Strahlbündels mit einer gewissen Ausdehnung weisen daher, wenn sie am äußeren Rand auf die Strukturelemente einfallen, über der gesamten Breite des Strahlbündels nur eine kleine Abweichung von den gewünschten 90° zu der Linienrichtung auf, während die Abweichung größer sein wird, wenn sie näher dem Symmetriezentrum auf die Grenzfläche mit der lichtbrechenden Struktur einfallen.

Die Erfindung kann vorsehen, daß der Hohllichtleiter die Form eines Mehrecks hat, wobei an einer oder mehreren, vorzugsweise allen Seiten dieses Mehrecks eine Lichtquelle zur Lichteinkopplung angeordnet ist, welche sich vorzugsweise parallel zu den Seiten des Mehrecks erstreckt oder mehrere punktförmige Lichtquellen entlang den Seiten angeordnet sind.

Die Erfindung betrifft insbesondere, aber nicht ausschließlich solche Leuchten, welche von Leuchten verschieden sind, die in der deutschen Patentanmeldung 199 63 685.0 beschrieben sind, insbesondere solche Leuchten, die von Leuchten mit mindestens einem Lichtleiter verschieden sind, in den von einer oder mehreren Lampen Licht über eine oder mehrere Lichteinkoppelseiten eingekoppelt wird und der mindestens eine von den Lichteinkoppelseiten verschiedene Lichtauskoppelseite mit einer Lichtauskoppelfläche besitzt, über welche Licht ausgekoppelt wird, wobei zumindest an einer Lichtauskoppelseite eine Struktur vorgesehen ist, welche eine Abschirmung des über diese Lichtauskoppelseite austretenden Lichts bewirkt, welche dadurch gekennzeichnet ist, daß die Struktur aus Licht transmittierenden Elementen besteht oder diese aufweist, die jeweils bezüglich einer Linie parallel zu der Lichtauskoppelfläche translationsinvariant sind, derart, daß sie entlang dieser Linie einen konstanten Querschnitt besitzen, wobei diese Elemente in der Richtung senkrecht zu dieser Linie im Querschnitt eine Breite besitzen, welche, bezogen auf eine Richtung senkrecht zu der Lichtauskoppelseite, von der dem Lichtleiter zugewandten Seite zu der von dem Lichtleiter abgewandten Seite zunimmt. Die Erfindung betrifft also insbesondere auch solche Leuchten, bei denen das Licht nicht über eine Seite eingekoppelt wird oder bei denen der Querschnitt der Licht transmittierenden Elemente, bezogen auf eine Richtung senkrecht zu der Lichtauskoppelseite, von der dem Lichtleiter zugewandten Seite zu der von dem Lichtleiter abgewandten Seite nicht zunimmt.

Das Gehäuse und/oder die Lichtaustrittsfläche kann insbesondere rund, elliptisch oder polygonförmig sein. Auch eine Leuchte mit einem dreieckigen Gehäuse und/oder einer dreieckigen Lichtaustrittsfläche sind möglich.

Die Erfindung kann vorsehen, daß der Lichtauskoppeleinrichtung gegenüberliegend eine reflektierende, den Hohlraum begrenzende Wand vorgesehen ist, deren Abstand von der Lichtauskoppeleinrichtung, ausgehend von der Stelle der Lichteinkopplung von einer Lichtquelle, zumindest über einen Teilabschnitt, z.B. in radialer Richtung, abnimmt,

Im Regelfall wird das Licht der Lampe zumindest teilweise direkt in den Hohlraum eingestrahlt, so daß sich der erwähnte Abstand in der Richtung weg von der Lampe verringert. Die besagte, der Lichtauskoppeleinrichtung gegenüberliegende Wand des Hohllichtleiters ist gemäß einer Ausführungsform der Erfindung die Dachwand des Hohllichtleiters bzw. des Hohlraums, wobei in diesem Fall die Höhe des Hohlraums von der Stelle der Lichteinkopplung in radialer Richtung abnimmt.

Die Erfindung kann vorsehen, daß die linienförmigen lichtbrechenden Strukturelemente der lichtbrechenden Struktur Seitenwände im wesentlichen parallel zu der Linienrichtung aufweisen, die an dem freien Ende der Strukturelemente einen Winkel einschließen, der größer als 90° ist, vorzugsweise in einem Bereich von 90° bis 130° liegt und insbesondere gemäß einer Ausführungsform der Erfindung in einem Bereich von 110° bis 128° liegen kann. Die vorangehend angegebenen Winkelbereiche von 90° bis 130° bzw. 110° bis 128° sind besonders für einen Brechungsindex von ungefähr 1,49 bevorzugt, können jedoch auch bei Materialien mit einem anderen Brechungsindex verwendet werden, der nicht allzu sehr von 1,49 verschieden ist. Dies gilt für gängige Materialien, wie Polycarbonat oder Polyester. Grundsätzlich können für von 1,49 verschiedene Brechungsindizes die bevorzugten Winkelbereiche verschieden sein, wobei sich diese bevorzugten Winkelbereiche für diese Brechungsindizes dadurch ermitteln lassen, daß die gleichen Abschirmwinkel für einen vorgegebenen Grenzwert der Leuchtdichte erzielt werden wie in dem Winkelbereich von 90° bis 130° bzw. 110° bis 128° bei einem Brechungsindex von 1,49. Grundsätzlich sollte gemäß den bevorzugten Ausführungsformen dieser Winkel jedoch, unabhängig vom Brechungsindex, größer als 90° sein. Vorzugsweise ist dieser Winkel bei allen Strukturelementen gleich, die im übrigen auch alle die gleiche Querschnittsform und ggf. auch identische Abmessungen haben können.

Erfindungsgemäß kann vorgesehen sein, daß für ein oder mehrere der Strukturelemente, vorzugsweise für alle Strukturelemente, die Linie, entlang der sich das Strukturelement erstreckt, konform und vorzugsweise parallel zu der Umfangslinie ist, also z.B. kreisförmig bei einer kreisförmigen Lichtaustrittsfläche, sechseckig bei einer sechseckigen Lichtaustrittsfläche usw.

Der Grenzwert der Leuchtdichte kann entsprechend geltenden Normen bzw. Normvorschlägen bei 200 cd/m$^2$, 500 cd/m$^2$ oder 1000 cd/m$^2$ liegen. Der Abschirmwinkel liegt bei gängigen Anwendungen im Bereich von mehr als 45°, bevorzugt in einem Bereich von 50° bis 75°, insbesondere 50° bis 65°.

Die lichtbrechenden Elemente haben gemäß der bevorzugten Ausführungsform der Erfindung entlang der Linienrichtung einen konstanten Querschnitt, der insbesondere die Form eines Dreiecks annehmen kann. Die Seitenwände der Elemente müssen jedoch nicht geradlinig sein, sondern können auch gekrümmt sein. Während gemäß einer bevorzugten Ausführungsform die Seitenwände an dem freien Ende der Strukturelemente direkt aneinander anschließen, kann auch vorgesehen sein, daß das freie Ende der Strukturelemente abgeflacht ist und die Seitenwände durch eine ebene oder gekrümmte Fläche verbunden sind. Im Fall von ebenen Seitenflächen oder Seitenflächen mit einem ebenen Abschnitt an dem freien Ende ist der vorangehend genannte Winkel dann durch die imaginäre Verlängerung der ebenen Seitenwände bzw. der ebenen Abschnitte der Seitenwände bestimmt. Im Falle von gekrümmten Seitenwänden kann der vorangehend erwähnte Winkel dem Winkel eines Dreiecks entsprechen, dem der Querschnitt der lichtbrechenden Elemente optimal, d.h. mit möglichst geringer Flächenabweichung zwischen der Fläche des Dreiecks und der Querschnittsfläche des lichtbrechenden Elements, einbeschrieben ist. Im Falle einer konvexen, d.h. nach außen gekrümmten Seitenwand würde dieser Winkel durch den Schnittwinkel von zwei Tangenten gebildet, die an die Seitenlinien des Querschnitts des lichtbrechenden Elements angelegt werden, während im Falle einer konkaven, d.h. nach innen gekrümmten Seitenwand, dieser Winkel durch zwei Geraden festgelegt würde, die jeweils durch den Kopfpunkt und den Fußpunkt einer Seitenlinie des Querschnitts, d.h. einer der Seitenwand im Querschnitt entsprechenden Linie, gelegt sind.

Ähnliche optische Eigenschaften lassen sich auch erreichen, wenn nur der Teil des Querschnitts an dem freien Ende der Prismen entlang der Linienrichtung konstant ist und, für die obengenannte Ausführungsform, einen über der Linie konstanten Winkel an dem freien Ende definiert. Dabei kann die Grundform des Querschnitts erhalten bleiben. Beispielsweise kann bei einem dreieckförmigen Querschnitt bei gleicher Grundform sich die Höhe des Dreiecks entlang der Linie ändern. Alternativ oder ergänzend kann sich jedoch auch die Figur, die der Querschnitt darstellt, entlang der Linie auf eine Teilfigur reduzieren, beispielsweise von einem Fünfeck zu einem Dreieck, welches dem Bereich an der Spitze des Fünfecks entspricht.

Gemäß einer bevorzugten Ausführungsform der Erfindung bestehen die lichtbrechenden Elemente aus einem Körper, der durch Verschieben einer Querschnittsfläche, beispielsweise eines Dreiecks, entlang einer Leitkurve erzeugt wird. Gemäß einer besonderen Ausführungsform kann diese Leitkurve in sich geschlossen sein, so daß sie einen Kreis, eine Ellipse, ein Polygon oder dgl. bildet. Dementsprechend bilden dann auch die lichtbrechenden Elemente an der Grenzfläche Kreise, Polygone, Ellipsen oder dgl. Insbesondere kann die besagte Leitkurve konform zu der Umfangslinie der Lichtaustrittsfläche sein, also z.B. eine Kreislinie sein, wenn die Lichtaustrittsfläche im Kreis ist, usw..

Gemäß einer besonderen Ausführungsform der Erfindung ist zumindest eine Struktur mit kreisförmigen lichtbrechenden Strukturelementen ausgebildet.

Die lichtbrechenden Strukturen lassen sich z.B. dadurch herstellen, daß eine Platte oder Folie aus einem gängigen lichtdurchlässigen Material, wie Glas, Polyester, Polystyrol, Polycarbonat, PET oder Polymethylmethacrylat, auf einer Fläche entsprechend bearbeitet oder geformt wird. Alternativ kann auch eine Folie, welche die lichtbrechende Struktur enthält, auf eine solche Platte aufgeklebt oder auch ohne Trägerplatte eingesetzt werden. Die lichtbrechende Struktur der Platte kann zu dem Hohlraum des Hohllichtleiters hinweisen oder von diesem wegweisen.

Die Platte wird in konventioneller Weise durch geeignete Mittel an dem Gehäuse der Leuchte gehalten. Gemäß einer Ausführungsform der Erfindung bildet der Hohllichtleiter der Leuchte einen nach unten offenen Kasten, der durch die besagte Platte auf seiner Unterseite verschlossen wird.

Gemäß einer Ausführungsform ist die Leuchte so eingerichtet, daß das Licht von einer oder mehreren Lichtquellen von der radialen Außenseite des Hohlraums aus eingekoppelt wird.

Die radial äußere Seite des Hohllichtleiters ist vorzugsweise offen. Den Hohllichtleiter von außen umschließend ist gemäß einer Ausführungsform der Erfindung eine Ringlampe angeordnet, welche radial von außen Licht in den Hohlraum des Hohllichtleiters einstrahlt. Anstelle einer Ringlampe können jedoch auch mehrere über den Umfang des Hohllichtleiters verteilte Lichtquellen vorgesehen sein. Statt einer konventionellen Lampe können auch Leuchtdioden, photolumineszente Folien oder dgl. als Lichtquelle verwendet werden.

Es kann alternativ oder ergänzend vorgesehen sein, daß der Hohllichtleiter einen radial inneren Rand besitzt und eine oder mehrere Lichtquellen entlang des radial inneren Rands angeordnet sind, deren Licht in den Hohllichtleiter eingekoppelt wird.

Die Erfindung kann auch vorsehen, daß an einen inneren radialen Rand eines ersten Hohllichtleiters anschließend ein zweiter, vorzugsweise konzentrischer Hohllichtleiter vorgesehen ist, wobei eine oder mehrere Lichtquellen zwischen dem inneren radialen Rand des ersten Hohllichtleiters und dem äußeren radialen Rand des zweiten Hohllichtleiters angeordnet sind.

Es kann auch vorgesehen sein, daß eine Lichtquelle sich durch eine Öffnung in einer Wand des Hohllichtleiters, insbesondere durch eine Öffnung in der Dachwand, in den Hohlraum des Hohllichtleiters erstreckt.

Die erfindungsgemäße Leuchten kann in verschiedener Form, beispielsweise als Downlight, Pendelleuchte, Einbau- oder Anbauleuchte, realisiert werden.

Weitere Merkmale der vorliegenden Erfindung ergeben sich aus der nachfolgenden Beschreibung von Ausführungsbeispielen der Erfindung anhand der beigefügten schematischen Zeichnungen.

Fig. 1     zeigt schematisch eine Ansicht eines erfindungsgemäßen Downlights von unten,

Fig. 2     zeigt einen schematischen Querschnitt durch den Hohllichtleiter der Leuchte gemäß Fig. 1 entsprechend der Linie II-II in Fig. 1,

Fig. 3     zeigt schematisch einen vergrößerten Ausschnitt aus einem radialen Querschnitt der Prismenplatte,

Fig. 4     zeigt einen teilweisen Querschnitt durch eine zweite Ausführungsform einer erfindungsgemäßen Leuchte,

Fig. 5     zeigt einen teilweisen Querschnitt einer dritten Ausführungsform einer erfindungsgemäßen Leuchte,

Fig. 6    zeigt einen Querschnitt einer vierten Ausführungsform einer erfindungsgemäßen Leuchte in der Form einer Deckeneinbauleuchte,

Fig. 7    zeigt einen Querschnitt einer fünften Ausführungsform der erfindungsgemäßen Leuchte in der Form einer Pendelleuchte.

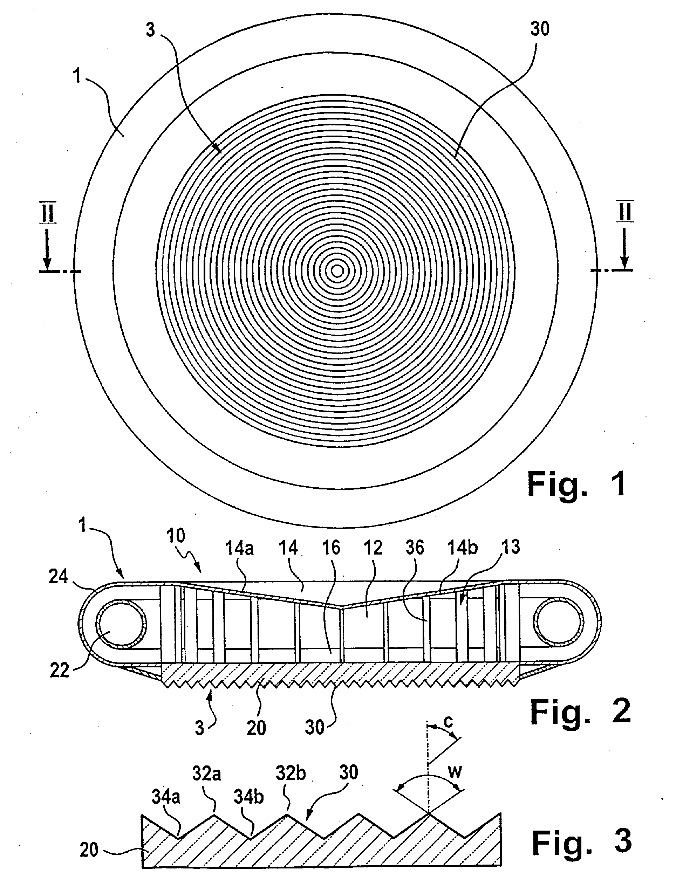

In Fig. 1 ist schematisch eine Ausführungsform einer erfindungsgemäßen Leuchte in der Form eines Downlights dargestellt. Dieses Downlight besitzt ein im wesentlichen kreiszylinderförmiges Gehäuse 1 sowie eine konzentrisch zu diesem Gehäuse angeordnete Lichtaustrittsfläche 3. Diese Lichtaustrittsfläche 3 ist gleichzeitig die Lichtauskoppelfläche eines Hohllichtleiters 10, der in dem Gehäuse 1 angeordnet ist und der in einem Querschnitt gemäß der Linie II-II der Fig. 1 in Fig. 2 schematisch dargestellt ist.

Der Hohllichtleiter 10 weist einen Hohlraum 12 auf, der von einer kegelförmigen Dachwand 14, die in einem radialen Querschnitt geneigte ebene Wandabschnitte 14a und 14b aufweist, und einer Lichtauskoppeleinrichtung 16 begrenzt wird, die aus einer Prismenplatte 20 besteht. Auf der radial äußeren Seite ist der Hohlraum 12 offen. In diese Öffnung ist ein Blendenkranz 13 eingesetzt, dessen Funktion nachfolgend noch erläutert wird. Auf dieser offenen Seite wird über eine Ringlampe 22 und einen der Ringlampe 22 zugeordneten Einkoppelreflektor 24 durch den Blendenkranz 13 Licht in den Hohlraum 12 eingekoppelt. Die Dachwand 14 ist reflektierend ausgebildet und reflektiert auf sie einfallendes Licht zu der Lichtauskoppeleinrichtung 16.

Das Licht von der Lampe 22 bzw. dem Einkoppelreflektor 24 fällt zu einem Teil direkt auf die Platte 20 ein. Ein Teil dieses Lichts tritt durch die Platte 20 hindurch und an der Lichtaustrittsfläche 3 aus. Ein weiterer Teil dieses Lichts wird an der Platte 20 reflektiert. Die Dachwand 14 reflektiert das auf sie direkt von der Lampe 22 bzw. dem Einkoppelreflektor 24 einfallende Licht sowie das zu ihr von der Platte 20 zurückreflektierte Licht nach unten zu der Prismenplatte 20.

Der Grad der Lichtauskopplung an der Prismenplatte 20 hängt unter anderem von dem Einfallswinkel der einfallenden Lichtstrahlen ab. Es hat sich gezeigt, daß sich eine gleichmäßigere Lichtstärkeverteilungskurve der Leuchte erreichen läßt, wenn die reflektierende Dachwand zu der Lichtauskoppeleinrichtung geneigt ist und sich der Abstand zwischen der Lichtauskoppeleinrichtung und der Dachwand in Richtung weg von der Lampe verringert. Insbesondere wird dadurch die Lichtstärkeverteilungskurve im Bereich von 0° vergleichmäßigt und ein Minimum der Lichtstärkeverteilung in diesem Bereich vermieden oder abgeschwächt. Es hat sich weiterhin gezeigt, daß eine solche Gestaltung zu einer Verbesserung des Leuchtenwirkungsgrades führt. Aus diesem Grund ist die Dachwand 14 kegelförmig ausgebildet und weist im radialen Querschnitt zwei gerade, zueinander geneigte Abschnitte 14a und 14b auf, so daß die Höhe des Hohlraums 12 in der Mitte am kleinsten und an dem radial äußeren Rand am größten ist.

Die Prismenplatte 20 ist mit einer Struktur versehen, welche eine Lichtauskopplung oberhalb eines Grenzwinkels zu der Senkrechten zu der Lichtaustrittsfläche in bestimmten Ebenen im wesentlichen verhindert und dadurch eine Abschirmung, d.h. eine Absenkung der mittleren Leuchtdichte der Lichtaustrittsfläche unter einen Grenzwert, z.B. 200 cd/m$^2$, 500 cd/m$^2$ oder 1000 cd/m$^2$, erzeugt.

Die Prismenplatte 20 weist auf ihrer von dem Hohlraum 12 abgewandten Seite eine Struktur von kreisförmigen Prismen 30 auf (vgl. Fig. 1), die in einem radialen Querschnitt eine dreieckige Form besitzen, wie man anhand von Fig. 3 erkennen kann. Fig. 3 zeigt, daß die Prismen unmittelbar aneinander angrenzen, gleichmäßig voneinander beabstandete Grate 32a, 32b, ... (nachfolgend kollektiv mit 32 bezeichnet) aufweisen und durch gleichmäßig voneinander beabstandete Vertiefungen 34a, 34b, ... nachfolgend kollektiv mit 34 bezeichnet, voneinander getrennt sind. Die Vertiefungen 34 und die Grate 32 bilden auf der von dem Hohlraum 12 abgewandten Seite der Platte 20 kreisförmige konzentrische Linien, die in Fig. 1 schematisch dargestellt sind.

Die Abschirmung kann z.B. durch Totalreflexion in den Prismen erzeugt werden. Licht in den Prismen wird beim Einfall auf die Grenzfläche zu einem optisch dünneren Medium, z.B. Luft, vollständig in die Prismen zurückreflektiert, wenn der Einfallswinkel größer als der Winkel der Totalreflexion ist. Dementsprechend ist der Austrittswinkel, bezogen auf die Grenzflächen der Prismen, begrenzt. Die Seitenwände der Prismen zwischen den Graten 32 und den Vertiefungen 34 stehen jedoch schräg zu der Lichtaustrittsfläche, so daß die Begrenzung des Lichtaustrittswinkels durch den Grenzwinkel der Totalreflexion nicht notwendigerweise eine Abschirmung bedeutet. Ein mögliches Kriterium für eine Abschirmung läßt sich dadurch ableiten, daß für Strahlengänge in den Prismen bis zu einer vorgegebenen Höchstzahl k (z.B. k = 1, 2, 3 oder 4) von inneren Reflexionen in den Prismen vor einem Lichtaustritt aus der Struktur der Austrittswinkel bezüglich einer Senkrechten zu der Grundfläche der lichtbrechenden Struktur maximal gleich dem Abschirmwinkel ist. Andere Abschirmmechanismen und Abschirmkriterien können alternativ oder ergänzend auch verwendet werden.

Es hat sich gezeigt, daß für Prismen mit einem Querschnitt in der Form eines gleichschenkligen Dreiecks eine gute Abschirmung erreicht wird, wenn zwischen dem Abschirmwinkel C und dem Prismenwinkel w für eine Grenzfläche zu Luft die folgenden Relationen bestehen:

$$w/2 \leq C \tag{1}$$

$$w \geq 2 \, (2 \, \arcsin(1/n) + 90)/3 \tag{2}$$

$$\tan(w/2) \leq (n \, \sin(\arcsin(1/n) - 3 \, w/2) + \cos(w/2)) \, / \, (n \, \cos(\arcsin(1/n) - 3 \, w/2) + \sin(w/2)), \tag{3}$$

wobei n der Brechungsindex der Platte 20 ist.

Der Prismenwinkel w liegt bei den derzeitig bevorzugten Ausführungsformen bei einem Brechungsindex von 1,49 im Bereich von 90° bis 130°, besonders bevorzugt im Bereich von 110° bis 128°.

Anstelle der in Fig. 3 dargestellten dreieckförmigen Prismen können auch andere Prismenformen verwendet werden.

Von einem Punkt der Ringlampe 22 wird Licht in alle Richtungen abgestrahlt und dementsprechend fällt Licht auf die Prismenplatte 20 auch in Ebenen ein, in denen die Prismen 30 keine oder nur eine weniger gute Abschirmwirkung haben.

Der Blendenkranz 13 ist daher so ausgebildet, daß das von der Ringlampe einfallende Licht im wesentlichen radial, d.h. in Ebenen senkrecht zu den Prismen 30 auf die Prismenplatte 20 einfällt. Hierfür weist der Blendenkranz 13 radial ausgerichtete Lamellen 36 auf. Da das Licht im wesentlichen nur in Ebenen auf die Prismen einfällt, in denen diese ihre maximale Abschirmwirkung besitzen, aufgrund der Rotationssymmetrie aber auch Licht in allen Ebenen senkrecht zu der Lichtaustrittsfläche 3 auf die Prismenplatte 20 eingestrahlt und aus dieser ausgekoppelt wird, kann bei entsprechender Ausgestaltung der Prismen, z.B. entsprechend den Formeln (1) bis (3), eine gegebene Abschirmbedingung in allen Ebenen senkrecht zu der Lichtaustrittsfläche eingehalten werden.

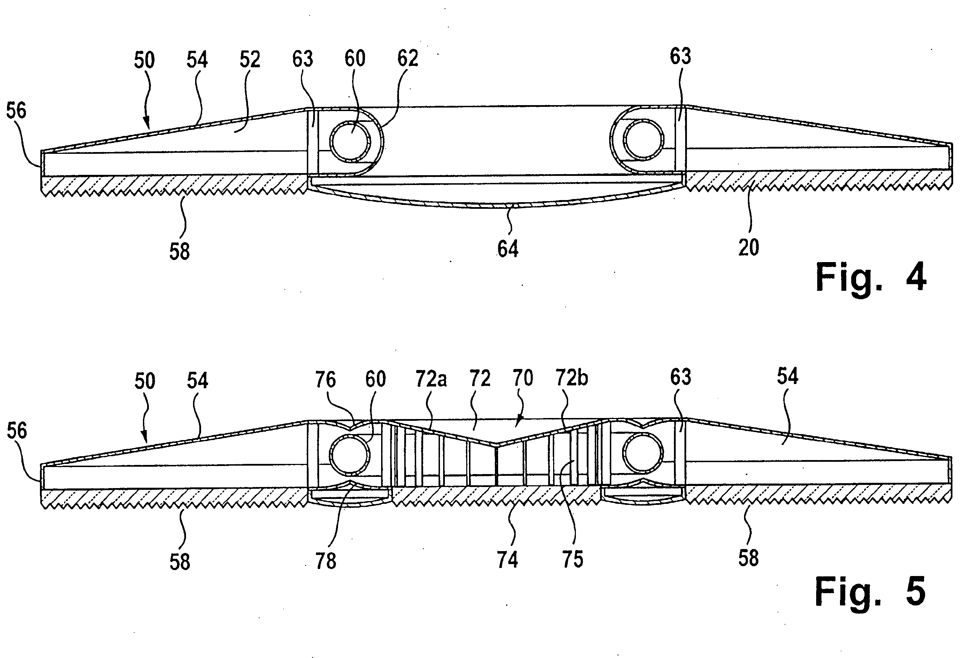

Fig. 4 zeigt eine zweite Ausführungsform einer erfindungsgemäßen Leuchte, die wieder ein Downlight sein kann, wobei nur für die Lichttechnik wesentliche Elemente dargestellt sind. Bei dieser Ausführungsform hat der Hohllichtleiter 50 eine Kreisringform. Der zugehörige Hohlraum 52 wird durch eine ebenfalls kreisringförmige Dachwand 54, eine radial äußere Seitenwand 56 und eine Lichtauskoppeleinrichtung 58 gebildet, wobei die Dachwand 54 und die Seitenwand 56 auf der Seite des Hohlraums 52 reflektierend ausgebildet sind. Die Dachwand 54 ist in einem radialen Querschnitt im wesentlichen gerade und zu der Lichtauskoppeleinrichtung 58 geneigt, so daß sich die Höhe des Hohlraums 52 zum radial äußeren Rand hin verringert. Am radial inneren Rand des Hohlraums 52 ist eine Ringlampe 60 mit einem zugehörigen Einkoppelreflektor 62 angeordnet, welche zusammen Licht in den Hohlraum 52 einkoppeln, das über die Lichtauskoppeleinrichtung 58 ausgekoppelt wird. Die Lichtauskoppeleinrichtung besteht wieder aus einer Prismenplatte 20, in der kreisförmige Prismen, wie vorangehend beschrieben, ausgebildet sind, die zu der Symmetrieachse der Leuchte konzentrisch sind. In der Öffnung des Hohllichtleiters 50 am radial inneren Rand, über die Licht von der Lampe 60 eingestrahlt wird, ist ein Blendenkranz 63 mit radial ausgerichteten Lamellen angeordnet, der das Licht im wesentlichen auf die Richtung senkrecht zu den Prismen der Platte 20 konzentriert. Die Öffnung in der Mitte des Hohllichtleiters 50 kann durch eine Abdeckung 64 abgedeckt sein. Die Einkoppelreflektoren 62 und die Abdeckung 64 können teilweise lichtdurchlässig sein, so daß ein Teil des Lichts auch über die Abdeckung 64 austritt. Wenn die Leuchte insgesamt eine Kreisringform haben soll, kann die Abdeckung 64 natürlich auch wegfallen.

Fig. 5 zeigt eine Abwandlung der Ausführungsform gemäß Fig.4, wobei gleiche Elemente mit den gleichen Bezugszeichen versehen sind. Bei dieser Ausführungsform ist in die innere Aussparung des kreisringförmigen Hohllichtleiters 50 ein weiterer Hohllichtleiter 70 mit einer kegelförmigen Dachwand 72, die im radialen Querschnitt zwei zueinander geneigte reflektierende Dachwandabschnitte 72a und 72b aufweist, gegenüber einer Lichtauskoppeleinrichtung 74 angeordnet. Die Ausbildung des Hohllichtleiters 70 entspricht derjenigen des Hohllichtleiters gemäß Fig. 1 bis 4. Die Ringlampe 60 ist zwischen der radial inneren Seite des Hohllichtleiters 50 und der radial äußeren Seite des Hohllichtleiters 70 angeordnet und koppelt Licht in beide Hohllichtleiter ein. Am radial äußeren Rand des Hohllichtleiters 70 ist ein Blendenkranz 75 angeordnet, der dem Blendenkranz 13 der ersten beschriebenen Ausführungsform entspricht. Zur Verbesserung der Lichteinkopplung sind vogelschwingenförmige Reflektoren 76 und 78 oberhalb und unterhalb der Ringlampe 60 vorgesehen. Der untere Reflektor 78 dient außerdem der Abdeckung der Lampe 60 nach unten. Eine solche Abdeckung kann auch entfallen. Beispielsweise können die Lichtauskoppeleinrichtungen 58 und 74 der beiden Hohllichtleiter 50 und 70 durch eine Prismenplatte gebildet werden, die beiden Hohllichtleitern gemeinsam ist.

Erfindungsgemäß können anstelle von Ringlampen auch andere Lampentypen verwendet werden. Beispielsweise können bei den vorangehend beschriebenen Ausführungsformen anstelle einer Ringlampe entlang des radial inneren bzw. äußeren Randes mehrere lokal begrenzte, idealerweise punktförmige Lichtquellen angeordnet sein, die, ggf. im Zusammenwirken mit einem das abgestrahlte Licht kollimierenden Element, z. B. einem Sammelspiegel oder einer Sammellinse, in deren bzw. dessen Brennpunkt die Lichtquelle angeordnet ist, oder einer Blende, Licht im wesentlichen in radialer Richtung in den Hohllichtleiter einstrahlt.

Statt einer entlang einer Randlinie angeordneten Lichtquelle kann auch eine idealerweise linienförmige Lichtquelle verwendet werden, die im Symmetriezentrum des Hohllichtleiters angeordnet ist und dementsprechend nach allen Seiten radial Licht abstrahlt.

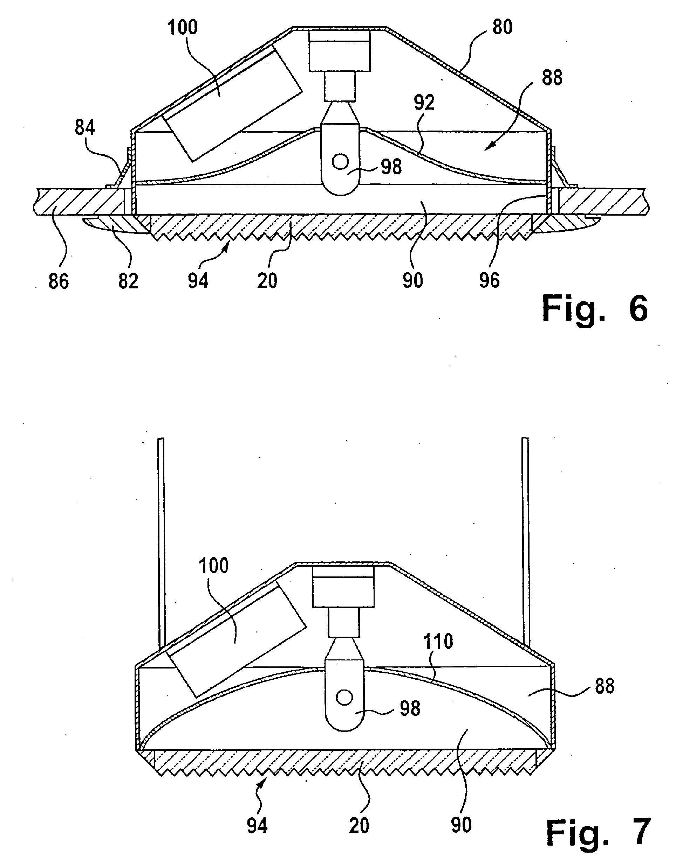

Fig. 6 zeigt eine mögliche Ausführungsform der Erfindung für das Beispiel einer Einbauleuchte, wobei dieselbe Ausgestaltung auch für andere Leuchtentypen verwendet werden kann. Die Einbauleuchte gemäß Fig. 6 besitzt ein Gehäuse 80, das in konventioneller Weise mit einem Einbauring 82 sowie einer Befestigungseinrichtung 84 zum Befestigen an einer Decke 86 versehen ist. In dem Gehäuse 80 ist ein Hohllichtleiter 88 ausgebildet. Der Hohlraum 90 dieses Hohllichtleiters 88 wird durch eine kreisringförmige Dachwand 92, eine der Dachwand 92 gegenüberliegende Lichtauskoppeleinrichtung 94 sowie durch einen Teil der Seitenwand des Gehäuses 80 gebildet, welcher eine Seitenwand 96 des Hohllichtleiters 88 bildet. Die Dachwand 92 und die Seitenwand 96 sind auf der dem Hohlraum 90 zugewandten Seite reflektierend ausgebildet. Durch eine zentrale Öffnung der Dachwand 92 ist eine Lampe 98 in den Hohlraum 90 eingeführt, so daß sie ihr Licht direkt in den Hohlraum 90 abgibt. Die Lampe 98 kann beispielsweise eine Halogenglühlampe, eine Hochdrucklampe mit Keramikbrenner oder dgl. sein. Zusätzliche Reflektoren (nicht dargestellt) können der Lampe 98 zugeordnet sein, um die Lichteinstrahlung von der Lampe in den Hohlraum 90 zu optimieren. Der Dachreflektor ist bei diesem Ausführungsbeispiel zur Mitte hin (vom Hohlraum 90 aus gesehen) konvex gekrümmt, so daß die Höhe des Hohlraums 90 und damit des Hohllichtleiters 88 insgesamt in der Richtung radial nach außen, d.h. von der Lampe 98 weg, abnimmt. Die Lichtauskoppeleinrichtung 94 wird, wie bei den vorangehend beschriebenen Ausführungsbeispielen, durch eine Prismenplatte 20 gebildet, wie sie vorangehend beschrieben wurde. Bei einer annähernd linienförmigen Lichtquelle, d.h. einer Lichtquelle mit relativ geringem Durchmesser, wird das von ihr abgestrahlte Licht im wesentlichen radial, d.h. in Ebenen senkrecht zu den Prismen 30 auf die Prismen eingestrahlt, so daß in allen radialen Ebenen eine Abschirmung erzeugt wird, ohne daß es eines zusätzlichen Elements, wie einer Blende, bedarf. Die lichttechnische Wirkungsweise des Hohllichtleiters und der Lichtauskoppeleinrichtung bei dieser Ausführungsform entspricht ansonsten im wesentlichen derjenigen der vorangehenden Ausführungsformen und wird daher nicht noch einmal beschrieben. Die Anordung der Lampe 98 kann variieren. Sie kann, wie in Fig. 10 gezeigt, sich teilweise in den Hohlraum 90 hinein erstrecken, aber auch vollständig in dem Hohlraum 90 aufgenommen sein oder sich bis zu ihrem Fassungsende in dem Hohlraum 90 befinden.

Oberhalb der Dachwand 92 und vom Zentrum nach außen versetzt ist an dem Gehäuse 80 ein Vorschaltgerät 100 angebracht, das sich teilweise in einen Bereich erstreckt, in dem die Höhe des Hohllichtleiters 88 vermindert ist. Der Raum in dem Gehäuse 80, der sich durch diese sich vermindernde Höhe des Hohllichtleiters zu der von der Lampe 98 abgewandten Seite ergibt, wird also in vorteilhafter Weise dafür benutzt, um das Vorschaltgerät 100, oder allgemeiner elektrische und/oder mechanische Komponenten unterzubringen, so daß insgesamt eine geringere Bauhöhe erreicht werden kann. Von diesem Konzept kann selbstverständlich auch bei den anderen vorangehend beschriebenen Ausführungsformen Gebrauch gemacht werden.

In einer Abwandlung der dargestellten Ausführungsform kann unterhalb der Lampe 98 eine Abdeckung (nicht dargestellt) vorgesehen sein, welche verhindert, daß Licht von der Lampe 98 direkt auf die Prismenplatte 20 in einem Bereich einfällt, in dem sich die Richtung der Linien, denen die Prismen folgen, auf kurzen Distanzen relativ stark ändert, wie dies beispielsweise bei kreisringförmigen Prismen mit einem kleinen Durchmesser der Fall ist. Dadurch wird verhindert, daß Licht in diesem Bereich aufgrund der Nichtidealität der Lampe 98 in Richtungen auf die Prismenplatte einfällt, die nicht senkrecht zu den Linien der Prismen sind. Die Abdeckung kann insbesondere auf der Lampe 98 zugewandten Seite reflektierend ausgebildet sein und das auf sie von der Lampe 98 einfallende Licht zu der reflektierenden Dachwand 92 reflektieren. Gegebenenfalls kann auch die der Prismenplatte 20 zugewandte Seite reflektierend ausgebildet sein, so daß auch in dem Bereich unmittelbar unterhalb der Lampe das Licht in dem Hohllichtleiter durch Reflexion an der Abdeckung bzw. an der Prismenplatte 20 sich ausbreiten kann.

Fig. 7 zeigt eine Abwandlung des Ausführungsbeispiels gemäß Fig. 6, diesmal für das Beispiel einer Pendelleuchte. Gleiche Bauelemente wie in Fig. 6 sind mit den gleichen Bezugszeichen versehen und werden nicht noch einmal beschrieben. Bei der Ausführungsform gemäß Fig. 6 ist eine Dachwand 110 als Begrenzung des Hohlraums 90 vorgesehen, welche, anders als bei dem Ausführungsbeispiel gemäß Fig. 10, vom Hohlraum 90 aus gesehen, nicht konvex, sondern konkav gekrümmt ist. Auch bei dieser Ausführungsform verringert sich die Höhe des Hohlraums 90 in der Richtung von der Lampe 98 zum radial äußeren Rand. Bei dieser Ausführungsform entfallen die Seitenwände 96, da die Dachwand 110 direkt auf dem Niveau der dem Hohlraum 90 zugewandten Seite der Platte 18 abschließt.

Die für die einzelnen Ausführungsbeispiele jeweils gewählten Leuchtenformen sind vollständig beispielhaft und sollen lediglich beispielhaft mögliche Anwendungsgebiete der Erfindung illustrieren. Erfindungsgemäße Leuchten können als Rundleuchten, Downlights, Anbauleuchten, Einbauleuchten oder Pendelleuchten ausgeführt sein, um einige Beispiele zu nennen.

Statt der Lampen, die mit Bezug auf die vorangehend beschriebenen Ausführungsbeispiele erwähnt wurden, können auch andersartige Lichtquellen, z.B. Kompaktleuchtstofflampen, Hochdrucklampen, Halogenglühlampen, Leuchtdioden, photolumineszente Folien oder dgl., verwendet werden.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| | |
|---|---|
| 1 | Gehäuse |
| 3 | Lichtaustrittsfläche |
| 10 | Hohllichtleiter |
| 12 | Hohlraum |
| 13 | Blende |
| 14 | Dachwand |
| 14a, 14b | Wandabschnitt |
| 16 | Lichtauskoppeleinrichtung |
| 20 | Prismenplatte |
| 22 | Ringlampe |
| 24 | Einkoppelreflektor |
| 30 | Prisma |
| 32, 32a, 32b | Prismengrat |
| 34, 34a, 34b | Vertiefung |
| 36 | Lamelle |
| 50 | Hohllichtleiter |
| 52 | Hohlraum |
| 54 | Dachwand |
| 56 | Seitenwand |
| 58 | Lichtauskoppeleinrichtung |
| 60 | Ringlampe |
| 62 | Einkoppelreflektor |
| 63 | Blendenkranz |
| 64 | Abdeckung |
| 70 | Hohllichtleiter |
| 72 | Dachwand |
| 72a, 72b | Dachwandabschnitt |
| 74 | Lichtauskoppeleinrichtung |
| 75 | Blendenkranz |
| 76 | oberer Reflektor |
| 78 | unterer Reflektor |
| 80 | Gehäuse |
| 82 | Einbauring |
| 84 | Befestigungseinrichtung |
| 86 | Decke |
| 88 | Hohllichtleiter |
| 90 | Hohlraum |
| 92 | Dachwand |
| 94 | Lichtauskoppeleinrichtung |
| 96 | Seitenwand |
| 98 | Lampe |
| 100 | Vorschaltgerät |
| 110 | Dachwand |

**Patentansprüche**

1. Leuchte zur Beleuchtung von Innenräumen mit einem nicht viereckigen Gehäuse (1; 80) und/oder einer nicht viereckigen Lichtaustrittsfläche (3), insbesondere Rundleuchte oder Downlight, welche mindestens einen Hohllichtleiter (88) mit einem Hohlraum (90) sowie eine Lichteinstrahleinrichtung (98), welche eine oder mehrere Lichtquellen (98) umfaßt und von welcher Licht in den Hohlraum (90) des Hohllichtleiters eingestrahlt wird, und mindestens eine Lichtauskoppeleinrichtung (94) aufweist, welche aus dem Hohlraum (90) Licht zum Austritt an einer nicht viereckigen Lichtaustrittsfläche (3) der Leuchte auskoppelt, wobei die Lichtauskoppeleinrichtung (94) aus einem lichtdurchlässigen Material besteht und eine Grenzfläche zwischen zwei Medien mit unterschiedlichem Brechungsindex aufweist, die mit einer lichtbrechenden Struktur (30) aus linienförmigen lichtbrechenden Strukturelementen (30) versehen sind, wobei die lichtbrechende Struktur (30) zumindest in einer Fläche senkrecht zu der Lichtaustrittsfläche (3) der Leuchte und den Linien, welchen die lichtbrechenden Strukturelemente folgen, eine Lichtauskopplung oberhalb eines Grenzwinkels zu einer Senkrechten zu der Lichtaustrittsfläche (3) im wesentlichen verhindert und dadurch eine Abschirmung, bezogen auf diese Fläche bzw. Flächen, erzeugt, **dadurch gekennzeichnet, daß** im Strahlengang des aus der Lichtaustrittsfläche austretenden Lichts genau eine eine Abschirmung erzeugende lichtbrechende Struktur angeordnet ist und die Lichteinstrahleinrichtung (98) so eingerichtet ist, daß das von ihr in den Hohlraum eingestrahlte und auf die Lichtauskoppeleinrichtung (94) direkt einfallende Licht überwiegend in einer Richtung senkrecht zu den die Strukturelemente festlegenden Linien einfällt, wobei die lichtbrechenden Strukturelemente (30) entsprechend einer Symmetrie bezüglich einer Achse senkrecht zu der Grenzfläche mit der lichtbrechende Struktur verlaufen und entlang dieser Symmetrieachse eine Linienförmige Lichtquelle (98) angeordnet ist, welche das Licht überwiegend radial in den Hohlraum einstrahlt, oder mehrere Lichtquellen entlang der Symmetrieachse angeordnet sind, welche Licht überwiegend in radialer Richtung in den Hohlraum einstrahlen, wobei bei dieser radialen Einstrahlung das Licht in Ebenen senkrecht zu den die Strukturelemente (30) festlegenden Linien eingestrahlt wird.

2. Leuchte nach Anspruch 1, **dadurch gekennzeichnet, daß** die Strukturelemente (30) in der Form konzentrischer Kreise ausgebildet sind und die Lichteinstrahleinrichtung (98) entlang der Symmetrieachse angeordnet ist und das Licht überwiegend radial in den Hohlraum (90) einstrahlt.

3. Leuchte zur Beleuchtung von Innenräumen mit einem nicht viereckigen Gehäuse (1; 80) und/oder einer nicht viereckigen Lichtaustrittsfläche (3), insbesondere Rundleuchte oder Downlight, welche mindestens einen Hohllichtleiter (10; 50; 70) mit einem Hohlraum (12; 52) sowie eine Lichteinstrahleinrichtung (13, 22; 60, 63), welche eine oder mehrere Lichtquellen (22; 60) umfaßt und von welcher Licht in den Hohlraum (12; 52) des Hohllichtleiters eingestrahlt wird, und mindestens eine Lichtauskoppeleinrichtung (16; 58; 74) aufweist, welche aus dem Hohlraum (12; 52) Licht zum Austritt an einer nicht viereckigen Lichtaustrittsfläche (3) der Leuchte auskoppelt, wobei die Lichtauskoppeleinrichtung (16; 58; 74) aus einem lichtdurchlässigen Material besteht und eine Grenzfläche zwischen zwei Medien mit unterschiedlichem Brechungsindex aufweist, die mit einer lichtbrechenden Struktur (30) aus linienförmigen lichtbrechenden Strukturelementen (30) versehen sind, wobei die lichtbrechende Struktur (30) zumindest in einer Fläche senkrecht zu der Lichtaustrittsfläche (3) der Leuchte und den Linien, welchen die lichtbrechenden Strukturelemente folgen, eine Lichtauskopplung oberhalb eines Grenzwinkels zu einer Senkrechten zu der Lichtaustrittsfläche (3) im wesentlichen verhindert und dadurch eine Abschirmung, bezogen auf diese Fläche bzw. Flächen, erzeugt, **dadurch gekennzeichnet, daß** im Strahlengang des aus der Lichtaustrittsfläche austretenden Lichts genau eine eine Abschirmung erzeugende lichtbrechende Struktur angeordnet ist und die Lichteinstrahleinrichtung (13, 22; 60, 63) so eingerichtet ist, daß das von ihr in den Hohlraum eingestrahlte und auf die Lichtauskoppeleinrichtung (16; 58; 74) direkt einfallende Licht überwiegend in einer Richtung senkrecht zu den die Strukturelemente festlegenden Linien einfällt, und daß eine oder mehrere Lichtquellen (22) außerhalb des Hohllichtleiters entlang einem radial inneren oder äußeren Rand angeordnet sind.

4. Leuchte nach Anspruch 3, **dadurch gekennzeichnet, daß** der Lichtquelle ein oder mehrere kollimierende Elemente (13) zugeordnet sind, welche das in den Hohlraum eingestrahlte Licht im wesentlichen auf Ebenen senkrecht zu den Linien der lichtbrechenden Strukturelemente (30) konzentrieren.

5. Leuchte nach Anspruch 4, **dadurch gekennzeichnet, daß** zur Kollimierung des in den Hohlraum eingestrahlten Lichts Lamellen (13) vorgesehen sind, welche den Lichteinfall überwiegend auf die Richtung senkrecht zu den Linien der lichtbrechenden Strukturelemente (30) beschränken.

6. Leuchte nach einem der Ansprüche 3 bis 5, **dadurch gekennzeichnet, daß** mehrere im wesentlichen punktförmige Lichtquellen entlang des inneren und/oder äußeren Rands des Hohllichtleiters (10; 50; 70) angeordnet sind, deren Licht in den Hohlraum (12; 52) eingestrahlt wird.

7. Leuchte nach einem der Ansprüche 3 bis 6, **dadurch gekennzeichnet, daß** das Licht der Lichtquelle oder der Lichtquellen (22; 60; 98) im wesentlichen in einem radial äußeren Bereich auf die lichtbrechende Struktur (30) einfällt.

8. Leuchte nach einem der Ansprüche 3 bis 7, **dadurch gekennzeichnet, daß** der Hohllichtleiter (10; 50; 70; 88) die Form eines Mehrecks hat, wobei an einer oder mehreren Seiten dieses Mehrecks eine Lichtquelle zur Lichteinkopplung angeordnet ist.

9. Leuchte nach einem der Ansprüche 1 bis 8, **dadurch gekennzeichnet, daß** die Linien, welchen die Strukturelemente (30) folgen, geschlossene Linien sind.

**Claims**

1. Light for illuminating interior spaces, with a non-rectangular housing (1; 80) and/or a non-rectangular light output area (3), in particular round light or downlight, which includes at least one hollow light guide (88) with a hollow volume (90) and a light irradiation device (98) which includes one or more light sources (98) and from which light is radiated into the hollow volume (90) of the light guide, and at least one light output coupling device (94) which couples out light from the hollow volume (90) for output on a non-rectangular light output area (3) of the light, while the light output coupling device (94) consists of a translucent material and has a boundary area between two media with different refractive indices, which are provided with a light-refractive structure (30) made from linear light-refractive structure elements (30), while the light-refractive structure (30), at least in an area perpendicular to the light output area (3) of the light and to the lines which the light-refractive structure elements follow, essentially prevents any light output coupling above a critical angle to a perpendicular to the light output area (3) and thereby creates a screen, in relation to this area or areas, **characterised in that** precisely one light-refractive structure creating a screen is arranged in the beam path of the light emitted from the light output area, and the light irradiation means (98) is installed such that the light irradiated by it into the hollow volume and directly incident on the light output coupling device (94) is mainly incident in a direction perpendicular to the lines defining the structure elements, while the light-refractive structure elements (30) run according to a symmetry in relation to an axis perpendicular to the boundary area with the light-refractive structure and a linear light source (98) is arranged along this axis of symmetry, which radiates the light mainly radially into the hollow volume, or several light sources are arranged along the axis of symmetry which mainly radiate light in the radial direction into the hollow volume, while in this radial irradiation, the light is radiated in in planes perpendicular to the lines defining the structure elements (30).

2. Light according to claim 1, **characterised in that** the structure elements (30) are in the form of concentric circles and the light irradiation means (98) is arranged along the axis of symmetry and the light is radiated mainly radially into the hollow volume (90).

3. Light for illuminating interior spaces, with a non-rectangular housing (1; 80) and/or a non-rectangular light output area (3), in particular round light or downlight, which includes at least one hollow light guide (10; 50; 70) with a hollow volume (12; 52) and a light irradiation means (13, 22; 60, 63) which includes one or more light sources (22; 60) and from which light is radiated into the hollow volume (12; 52) of the hollow light guide, and at least one light output coupling device (16; 58; 74) which couples out light from the hollow volume (12; 52) for output on a non-rectangular light output area (3) of the light, while the light output coupling device (16; 58; 74) consists of a translucent material and has a boundary area between two media with different refractive indices, which are provided with a light-refractive structure (30) made from linear light-refractive structure elements (30), while the light-refractive structure (30), at least in an area perpendicular to the light output area (3) of the light and the lines which the light-refractive structure elements follow, essentially prevents any light outcoupling above a critical angle to a perpendicular to the light output area (3) and thereby creates a screen, in relation to this area or areas, **characterised in that** precisely one light-refractive structure creating a screen is arranged in the beam path of the light emitted from the light output area, and the light irradiation means (13, 22; 60, 63) is installed such that the light radiated by it into the hollow volume and directly incident on the light output coupling device (16; 58; 74) is mainly incident in a direction perpendicular to the lines defining the structure elements, and that one or more light sources (22) are arranged outside the hollow light guide along a radial inner or outer edge.

4. Light according to claim 3, **characterised in that** one or more collimating elements (13) are assigned to the light source which concentrate the light radiated into the hollow volume essentially on planes perpendicular to the lines of the light-refractive structure elements (30).

5. Light according to claim 4, **characterised in that** blades (13) are provided to collimate the light radiated into the hollow volume, which restrict the incidence of light principally to the direction perpendicular to the lines of the light-refractive structure elements (30).

6. Light according to one of claims 3 to 5, **characterised in that** several essentially punctiform light sources are arranged along the inner and/or outer edge of the hollow light guide (10; 50; 70), and their light is radiated into the hollow volume (12; 52).

7. Light according to one of claims 3 to 6, **characterised in that** the light from the light source or light sources (22; 60; 98) is incident on the light-refractive structure (30) essentially in a radial outer area.

8. Light according to one of claims 3 to 7, **characterised in that** the hollow light guide (10; 50; 70; 88) has a polygonal shape, with a light source for light coupling arranged on one or more sides of this polygon.

9. Light according to one of claims 1 to 8, **characterised in that** the lines which the structure elements (30) follow are closed lines.

## Revendications

1. Luminaire pour l'éclairage d'espaces intérieurs, avec un boîtier non quadrangulaire (1 ; 80) et/ou une surface de sortie lumineuse non quadrangulaire (3), en particulier un luminaire circulaire ou un plafonnier, lequel comporte au moins un guide de lumière creux (88) avec une cavité (90) ainsi qu'un dispositif d'irradiation de lumière (98) qui comprend une ou plusieurs sources lumineuses (98) et par lequel de la lumière est irradiée dans la cavité (90) du guide de lumière creux, et au moins un dispositif de découplage lumineux (94) qui découple de la lumière de la cavité (90) pour sa sortie sur une surface de sortie lumineuse (3) non quadrangulaire du luminaire, ledit dispositif de découplage lumineux (94) étant composé d'un matériau transparent et comportant une surface de délimitation entre deux milieux à indices de réfraction différents, lesquels sont munis d'une structure réfringente (30) formée d'éléments structurels réfringents linéaires (30), ladite structure réfringente (30) empêchant essentiellement un découplage lumineux au-dessus d'un angle limite à une perpendiculaire à la surface de sortie lumineuse (3) au moins sur une surface, perpendiculairement à la surface de sortie lumineuse (3) du luminaire et aux lignes que suivent les éléments structurels réfringents, et générant ainsi un écran par rapport à cette surface ou à ces surfaces, **caractérisé en ce qu'**une structure réfringente générant un écran est précisément disposée sur le trajet des rayons de la lumière sortant de la surface de sortie lumineuse, et **en ce que** le dispositif d'irradiation de lumière (98) est réalisé de telle manière que la lumière qu'il irradie dans la cavité et directement incidente sur le dispositif de découplage lumineux (94) est principalement incidente dans une direction perpendiculaire aux lignes définissant les éléments structurels, lesdits éléments structurels réfringents (30) s'étendant perpendiculairement à la surface de délimitation avec la structure réfringente, suivant une symétrie par rapport à un axe, et une source lumineuse linéaire (98) étant disposée le long de cet axe de symétrie, laquelle irradie la lumière principalement en direction radiale dans la cavité, ou plusieurs sources lumineuses étant disposées le long de l'axe de symétrie, lesquelles irradient la lumière principalement en direction radiale dans la cavité, la lumière étant lors de ladite irradiation radiale irradiée sur des plans perpendiculairement aux lignes définissant les éléments structurels (30).

2. Luminaire selon la revendication 1, **caractérisé en ce que** les éléments structurels (30) sont réalisés sous la forme de cercles concentriques, **en ce que** le dispositif d'irradiation de lumière (98) est disposé le long de l'axe de symétrie, et **en ce que** la lumière est principalement irradiée en direction radiale dans la cavité (90).

3. Luminaire pour l'éclairage d'espaces intérieurs, avec un boîtier non quadrangulaire (1 ; 80) et/ou une surface de sortie lumineuse non quadrangulaire (3), en particulier un luminaire circulaire ou un plafonnier, lequel comporte au moins un guide de lumière creux (10 ; 50 ; 70) avec une cavité (12 ; 52) ainsi qu'un dispositif d'irradiation de lumière (13, 22 ; 60, 63) qui comprend une ou plusieurs sources lumineuses (22 ; 60) et par lequel de la lumière est irradiée dans la cavité (12 ; 52) du guide de lumière creux, et au moins un dispositif de découplage lumineux (16 ; 58 ; 74) qui découple de la lumière de la cavité (12 ; 52) pour sortie sur une surface de sortie lumineuse (3) non quadrangulaire du luminaire, ledit dispositif de découplage lumineux (16 ; 58 ; 74) étant composé d'un matériau transparent et comportant une surface de délimitation entre deux milieux à indices de réfraction différents, lesquels sont munis d'une structure réfringente (30) formée d'éléments structurels réfringents linéaires (30), ladite structure réfringente (30) empêchant essentiellement un découplage lumineux au-dessus d'un angle limite à une perpendiculaire à la surface de sortie lumineuse (3) au moins sur une surface, perpendiculairement à la surface de sortie lumineuse (3) du luminaire et aux lignes que suivent les éléments structurels réfringents, et générant ainsi un écran par rapport à cette surface ou à ces surfaces, **caractérisé en ce qu'**une structure réfringente générant un écran est précisément disposée sur le trajet des rayons de la lumière sortant de la surface de sortie lumineuse, **en ce que** le dispositif d'irradiation de lumière (13, 22 ; 60, 63) est réalisé de telle manière que la lumière qu'il irradie dans la cavité et directement incidente sur le dispositif de découplage lumineux (16 ; 58 ; 74) est principalement incidente dans une direction perpendiculaire aux lignes définissant les éléments structurels, et **en ce qu'**une ou plusieurs sources lumineuses (22) sont disposées extérieurement au guide de lumière creux le long d'un bord radialement intérieur ou extérieur.

4. Luminaire selon la revendication 3, **caractérisé en ce qu'**un ou plusieurs éléments collimateurs (13) sont affectés à la source lumineuse, lesquels concentrent la lumière irradiée dans la cavité essentiellement sur des plans perpendiculaires aux lignes des éléments structurels réfringents (30).

5. Luminaire selon la revendication 4, **caractérisé en ce que** des lamelles (13 sont prévues pour la collimation de la lumière irradiée dans la cavité, lesquelles restreignent l'incidence lumineuse principalement à la direction perpendiculaire aux lignes des éléments structurels réfringents (30).

6. Luminaire selon l'une des revendications 3 à 5, **caractérisé en ce que** plusieurs sources lumineuses essentiellement ponctuelles, dont la lumière est irradiée dans la cavité (12 ; 52), sont disposées le long du bord intérieur et/ou extérieur du guide de lumière creux (10 ; 50 ; 70).

7. Luminaire selon l'une des revendications 3 à 6, **caractérisé en ce que** la lumière de la ou des sources lumineuses (22 ; 60 ; 98) est essentiellement incidente sur la structure réfringente (30) dans une zone radialement extérieure.

8. Luminaire selon l'une des revendications 3 à 7, **caractérisé en ce que** le guide de lumière creux (10 ; 50 ; 70 ; 88) a la forme d'un polygone, une source lumineuse pour un couplage de lumière étant disposée sur un ou plusieurs côtés du dit polygone.

9. Luminaire selon l'une des revendications 1 à 8, **caractérisé en ce que** les lignes que suivent les éléments structurels (30) sont des lignes fermées.

EP 1 132 678 B1

Fig. 1

Fig. 2

Fig. 3

14

Fig. 4

Fig. 5

EP 1 132 678 B1

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 99110141 A
- EP 1130312 A
- EP 0496921 A1
- US 5863114 A
- DE 19963685